# EUROPEAN PATENT APPLICATION

(11) **EP 4 644 294 A1**
(43) Date of publication of application: **05.11.2025**
(21) Application number: 24824869.2
(22) Date of filing: 15.01.2024
(51) Int. Cl.: B65G 1/04, B65G 1/137

(54) **ROBOT CONTROL METHOD AND APPARATUS, AND GOODS HANDLING SYSTEM**

(30) Priority: 20.06.2023 CN 202310736004
(71) Applicant: Beijing Jingdong Qianshi Technology Co., Ltd., Beijing 100176 (CN)
(72) Inventor: YUE, Xingzhong, Beijing 100176 (CN)
(74) Representative: Page White Farrer
(86) International application number: PCT/CN2024/072359
(87) International publication number: WO 2024/259965

(57) **Abstract**

A robot control method and apparatus, and a goods handling system (5) and a computer-readable storage medium. A robot (10) comprises a pallet fork (11) capable of moving up and down, and at least one pack basket (12), wherein the pallet fork is used for taking and placing goods, and each pack basket is used for temporarily storing goods. The robot control method comprises : controlling a robot to move to a first goods-taking and stopping position, wherein the first goods-taking and stopping position is a stopping position at which the robot takes out at least one first target good; controlling the robot to use a pallet fork to take out the at least one first target good at the first goods-taking and stopping position, wherein using the pallet fork to take out the at least one first target good comprises : using the pallet fork to take out one of the at least one first target good and loading same onto the pallet fork; and when the at least one first target good has been taken out at the first goods-taking and stopping position, controlling the robot to move to a target position, wherein the pallet fork loads one of the at least one first target good during the process of the robot moving to the target position.

## Description

### CROSS-REFERENCE TO RELATED APPLICATIONS

The present application is based on and claims the priority of Chinese application No. 202310736004.5 filed on June 20, 2023, the disclosure of which is hereby incorporated by reference in its entirety into the present application.

### TECHNICAL FIELD

The present disclosure relates to the field of computer technologies, and in particular, to a robot control method and apparatus, goods handling system, and a computer-readable storage medium.

### BACKGROUND

A multi-layer container robot is a device carried with a pack basket and a fork. In the related art, the robot is controlled to stop at goods-taking stop position, and take out goods by using the fork at the goods-taking stop position and load the goods into the pack basket, and then the robot with the goods loaded in the pack basket only is controlled to move to goods-placing stop position.

### SUMMARY

According to a first aspect of the present disclosure, there is provided a method for controlling a robot, wherein the robot comprises a liftable fork and at least one pack basket, the fork being used for taking and placing goods, and each pack basket being used for temporarily storing the goods, the method for controlling the robot comprising: controlling the robot to move to a first goods-taking stop position, wherein the first goods-taking stop position is a stop position at which the robot takes out at least one first target goods; controlling the robot to take out the at least one first target goods by using the fork at the first goods-taking stop position, wherein the taking out the at least one first target goods by using the fork comprises taking out one of the at least one first target goods by using the fork and loading the one of the at least one first target goods onto the fork; and controlling the robot to move to a target position in a case where the taking out the at least one first target goods at the first goods-taking stop position is completed, wherein the fork is loaded with the one of the at least one first target goods during a process of the robot moving to the target position.

In some embodiments, the target position comprises a goods-placing stop position corresponding to the at least one first target goods, the goods-placing stop position being a stop position at which the robot places the at least one first target goods, and the method for controlling the robot further comprises: controlling the fork to place the first target goods loaded on the fork at goods position corresponding to the goods-placing stop position in a case where the robot moves to the goods-placing stop position; and controlling the fork to take a first target goods loaded in the pack basket out of the pack basket and placing the taken first target goods at the goods position corresponding to the goods-placing stop position after the first target goods loaded on the fork is placed at the goods position corresponding to the goods-placing stop position in a case where the pack basket of the robot is therein loaded with goods.

In some embodiments, the target position comprises a second goods-taking stop position in a case where there is an idle pack basket of the robot, the second goods-taking stop position being a stop position at which at least one second target goods is taken out, and the method for controlling the robot further comprises: controlling the fork to load the first target goods loaded on the fork into the idle pack basket; and controlling the robot to take out the at least one second target goods by using the fork at the second goods-taking stop position in a case where the robot moves to the second goods-taking stop position, wherein the taking out the at least one second target goods by using the fork comprises taking out one of the at least one second target goods by using the fork and loading the one of the at least one second target goods onto the fork.

In some embodiments, the taking out the at least one second target goods by using the fork further comprises: taking out another second target goods than the second target goods loaded on the fork of the at least one second target goods by using the fork and loading the other second target goods into the idle pack basket.

In some embodiments, the method for controlling the robot further comprises: sending loading condition information of the pack basket of the robot at the first time in response to receiving, at a first time, a request for acquiring a loading condition of the robot; receiving task information of a handling task corresponding to the first time, wherein the task information is determined according to the loading condition information of the pack basket of the robot at the first time, and the task information corresponding to the first time comprises position information of the first goods-taking stop position, goods information of the at least one first target goods, and position information of goods-placing stop position corresponding to the handling task for the first time; and in a case where a goods docking type of the goods-placing stop position corresponding to the handling task for the first time belongs to a specified docking type, sending loading condition information of the pack basket and the fork of the robot at a second time in response to receiving, at the second time later than the first time, a request for acquiring a loading condition of the robot, wherein the loading condition information of the pack basket and the fork of the robot at the second time is used for determining task information of a handling task corresponding to the second time, and the task information corresponding to the second time comprises position information of the second goods-taking stop position, goods information of the at least one second target goods, and position information of goods-taking stop position corresponding to the handling task for the second time.

In some embodiments, the method for controlling the robot further comprises: acquiring configuration information stored locally, the configuration information comprising a correspondence between the goods-placing stop position and whether to perform goods loading by using the pack basket and the fork simultaneously, wherein the loading condition information of the pack basket and the fork of the robot at the second time is sent in response to receiving, at the second time later than the first time, the request for acquiring the loading condition of the robot, in a case where the goods docking type of the goods-placing stop position corresponding to the handling task for the first time belongs to the specified docking type and the configuration information indicates that for the goods-placing stop position corresponding to the handling task for the first time, goods loading is performed by using the pack basket and the fork simultaneously.

In some embodiments, the taking out one of the at least one first target goods by using the fork and loading the one of the at least one first target goods onto the fork comprises: taking out one of the at least one first target goods by using the fork and loading the one of the at least one first target goods onto the fork in a case where a goods docking type of the goods-placing stop position corresponding to the at least one first target goods belongs to a specified docking type.

In some embodiments, the method for controlling the robot further comprises: acquiring configuration information stored locally, the configuration information comprising a correspondence between the goods-placing stop position and whether to perform goods loading by using the pack basket and the fork simultaneously, wherein the one of the at least one first target goods is taken out by using the fork and loaded onto the fork in a case where the goods docking type of the goods-placing stop position belongs to the specified docking type and the configuration information indicates that for the goods-placing stop position, goods loading is performed by using the pack basket and the fork simultaneously.

In some embodiments, the taking out the at least one first target goods by using the fork further comprises: taking out another first target goods than the first target goods loaded on the fork of the at least one first target goods by using the fork and loading the other first target goods into an idle pack basket of the robot.

In some embodiments, the method for controlling the robot further comprises: sending loading condition information of the pack basket of the robot at a first time in response to receiving, at the first time, a request for acquiring a loading condition of the robot; and receiving task information of a handling task corresponding to the first time, wherein the task information is determined according to the loading condition information of the pack basket of the robot at the first time, and the task information corresponding to the first time comprises position information of the first goods-taking stop position, goods information of the at least one first target goods, and position information of the target position.

According to a second aspect of the present disclosure, there is provided an apparatus for controlling a robot, comprising: a first control module configured to control the robot to move to a first goods-taking stop position, wherein the first goods-taking stop position is a stop position at which the robot takes out at least one first target goods, and the robot comprises a liftable fork and at least one pack basket, the fork being used for taking and placing goods, and each pack basket being used for temporarily storing the goods; a second control module configured to control the robot to take out the at least one first target goods by using the fork at the first goods-taking stop position, wherein the taking out the at least one first target goods by using the fork comprises taking out one of the at least one first target goods by using the fork and loading the one of the at least one first target goods onto the fork; and a third control module configured to, control the robot to move to a target position in a case where the taking out the at least one first target goods at the first goods-taking stop position is completed, wherein the fork is loaded with the one of the at least one first target goods during a process of the robot moving to the target position.

According to a third aspect of the present disclosure, there is provided an apparatus for controlling a robot, comprising: a memory; and a processor coupled to the memory, the processor being configured to perform, based on instructions stored in the memory, the method for controlling the robot according to any of the above embodiments.

According to a fourth aspect of the present disclosure, there is provided a system for handling goods, comprising: an apparatus for controlling a robot configured to perform the method for controlling the robot according to any of the above embodiments.

In some embodiments, the system for handling goods further comprises: a task processing apparatus configured to send, at a first time, a request for acquiring a loading condition of a robot to the apparatus for controlling the robot; the apparatus for controlling the robot configured to, in response to receiving, at the first time, the request for acquiring the loading condition of the robot, send loading condition information of the pack basket of the robot at the first time to the task processing apparatus; and the task processing apparatus further configured to determine task information of a handling task corresponding to the first time according to the loading condition information of the pack basket of the robot at the first time, the task information corresponding to the first time comprising position information of a first goods-taking stop position, goods information of at least one first target goods, and position information of a target position.

In some embodiments, the task information corresponding to the first time further comprises position information of goods-placing stop position corresponding to the at least one first target goods, and the target position comprises a second goods-taking stop position, the second goods-taking stop position being a stop position at which at least one second target goods is taken out; the task processing apparatus is further configured to send, at a second time later than the first time, a request for acquiring a loading condition of the robot to the apparatus for controlling the robot; the apparatus for controlling the robot is further configured to, in a case where a goods docking type at the goods-placing stop position corresponding to the at least one first target goods belongs to a specified docking type, in response to receiving, at the second time, the request for acquiring the loading condition of the robot, send loading condition information of the pack basket and the fork of the robot at the second time to the task processing apparatus; and the task processing apparatus is further configured to determine task information of a handling task corresponding to the second time according to the loading condition information of the pack basket and the fork of the robot at the second time, the task information corresponding to the second time comprising position information of a second goods-taking stop position, goods information of the at least one second target goods, and position information of goods-placing stop position corresponding to the at least one second target goods.

According to a fifth aspect of the present disclosure, there is provided a computer-readable storage medium having thereon stored computer program instructions which, when executed by a processor, implement the method for controlling the robot according to any of the above embodiments.

According to a sixth aspect of the present disclosure, there is provided a computer program, comprising: instructions which, when executed by a processor, cause the processor to perform the method for controlling the robot according to any of the above embodiments.

### BRIEF DESCRIPTION OF THE DRAWINGS

The accompanying drawings, which constitute a part of the specification, illustrate embodiments of the present disclosure and together with the description, serve to explain the principles of the present disclosure.

The present disclosure may be more clearly understood according to the following detailed description by referring to the accompanying drawings, in which:
Fig. 1 is a schematic structural diagram illustrating a robot according to some embodiments of the present disclosure;
Fig. 2 is a flow diagram illustrating a method for controlling a robot according to some embodiments of the present disclosure;
Fig. 3 is a block diagram illustrating an apparatus for controlling a robot according to some embodiments of the present disclosure;
Fig. 4 is a block diagram illustrating an apparatus for controlling a robot according to other embodiments of the present disclosure;
Fig. 5 is a block diagram illustrating a system for handling goods according to some embodiments of the present disclosure;
Fig. 6 is a block diagram illustrating a computer system for implementing some embodiments of the present disclosure.

### DETAILED DESCRIPTION

Various exemplary embodiments of the present disclosure will now be described in detail with reference to the accompanying drawings. It should be noted that: the relative arrangement of parts and steps, numerical expressions and numerical values set forth in these embodiments do not limit the scope of the present disclosure unless specifically stated otherwise.

Meanwhile, it should be understood that the sizes of the parts shown in the drawings are not drawn to an actual scale for ease of the description.

The following description of at least one exemplary embodiment is merely illustrative in nature and is in no way used as any limitation on this disclosure and its application or use.

Techniques, methods, and devices known to one of ordinary skill in the related art may not be discussed in detail but are intended to be part of the description where appropriate.

In all examples shown and discussed herein, any specific value should be construed as exemplary only and not as limiting. Thus, other examples of the exemplary embodiments may have different values.

It should be noted that: similar reference numbers and letters refer to similar items in the following figures, and thus, once an item is defined in one figure, it need not be discussed further in subsequent figures.

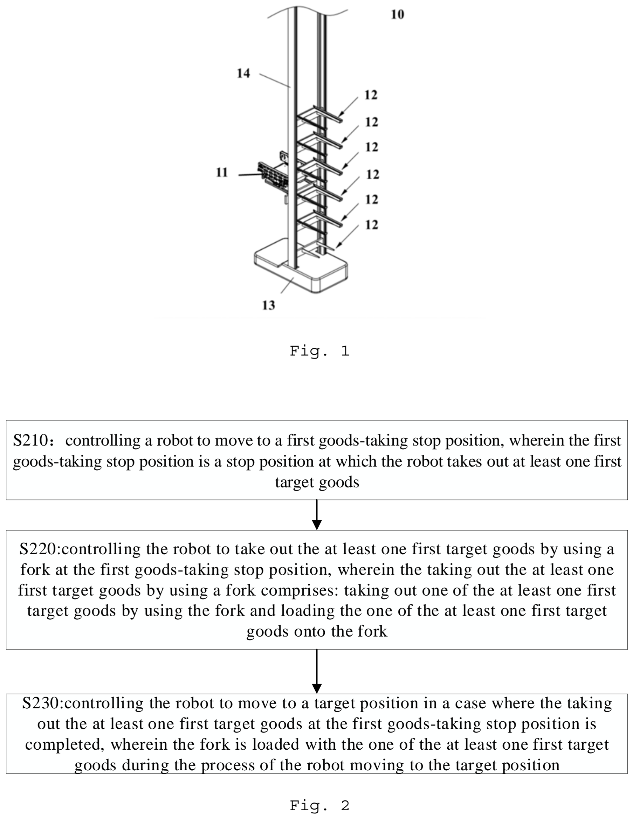

Fig. 1 is a schematic structural diagram illustrating a robot according to some embodiments of the present disclosure.

As shown in Fig. 1, robot 10 comprises a liftable fork 11 and at least one pack basket 12. The fork 11 is used for taking and placing goods, and each pack basket 12 is used for temporarily storing the goods. For example, the fork 11 is used for taking out goods from a shelf or other places where goods is placed and loading the goods into the pack basket 12, or taking out goods from the pack basket 12 and placing the goods onto the shelf or other places where goods is placed. The robot 10 further comprises a movable mechanism 13 and a stand 14. The robot 10 may move by the movable mechanism 13. The fork 11 may lift up and down along the stand 14. For example, the pack basket 12 may be in a form or structure of a rack as shown in Fig. 1, or in another form such as a container. In some embodiments, the goods may be a container.

For example, the process of the robot 10 taking and placing goods may comprise: the fork 11 grabbing a container on an outside shelf by lifting and placing it into the pack basket 12 after taking the goods is completed and the robot 10 reaching a destination where the container is dropped, taking the container out of the pack basket 12 and placing it onto a conveyor line. In the process of this operation, subdivision operations sequentially comprise: taking the goods out of the shelf, completing the taking to make the goods onto the fork, placing the goods from the fork to the pack basket, completing the placing to make the goods into the pack basket, taking the goods out of the pack basket, completing the taking to make the goods onto the fork, placing the goods from the fork to the outside, and completing the placing to make the goods onto the shelf.

In the related art, even when the robot is fully loaded with goods, that is, the pack basket is fully loaded with goods, the fork is still idle, without full use of the various components of the robot.

For the above technical problems, the present disclosure provides a method for controlling a robot, by which goods handling capacity and efficiency of the robot can be improved.

A method for controlling a robot in embodiments of the present disclosure will be below described in detail by taking an example that the robot comprises a liftable fork and at least one pack basket.

Fig. 2 is a flow diagram illustrating a method for controlling a robot according to some embodiments of the present disclosure.

As shown in Fig. 2, the method for controlling the robot comprises: step S210, controlling the robot to move to a first goods-taking stop position, wherein the first goods-taking stop position is a stop position at which the robot takes out at least one first target goods; step S220, controlling the robot to take out the at least one first target goods by using a fork at the first goods-taking stop position, wherein the taking out the at least one first target goods by using the fork comprises taking out one of the at least one first target goods by using the fork and loading the one of the at least one first target goods onto the fork; and step S230, controlling the robot to move to a target position in a case where the taking out the at least one first target goods at the first goods-taking stop position is completed, wherein the fork is loaded with the one of the at least one first target goods during the process of the robot moving to the target position. The method for controlling the robot of the present disclosure can be applied to goods inbound scenario or goods outbound scenario.

In some embodiments, in a case where there are a plurality of first target goods, another first target goods than the first target goods loaded on the fork in the plurality of first target goods is loaded into the pack basket of the robot. In some embodiments, the method for controlling the robot is performed by an apparatus for controlling the robot. For example, the apparatus for controlling the robot is deployed in a robot console or robot control system. In other embodiments, the method for controlling the robot may also be performed by the robot. For example, the apparatus for controlling the robot is deployed in the robot.

In the above embodiments, during the process of controlling the robot to handle the goods, the robot can be controlled to move while the fork of the robot is loaded with one goods, so that the robot can not only load the goods by using the pack basket, but also load the goods by using the fork. By using the pack basket and the fork to carry handling capacity, the handling capacity of the robot in handling goods can be improved. In addition, by increasing handling capacity carried by the fork on the basis of the pack basket, the number of goods handled by the robot once is increased, and thus the handling efficiency of the robot in handling goods can be improved. For example, in a case where a robot comprises 8 pack baskets and 1 fork, loading goods by using the pack baskets and the fork can also be referred to as "8+1" loading. Through tests, it has been found that the method for controlling the robot of the present disclosure enables an increase in the number of goods handled by a single robot once by 12.5%.

In step S210, the robot is controlled to move to a first goods-taking stop position, wherein the first goods-taking stop position is a stop position where the robot takes out at least one first target goods. For example, the goods-taking stop position is a picking location.

In step S220, the robot is controlled to take out the at least one first target goods by using the fork at the first goods-taking stop position, wherein the taking out the at least one first target goods by using the fork comprises taking out one of the at least one first target goods by using the fork and loading the one of the at least one first target goods onto the fork. In some embodiments, in a case where there are a plurality of first target goods, another first target goods than the first target goods loaded onto the fork of the plurality of first target goods is loaded into the pack basket of the robot. For example, goods may be a container and the fork being loading with the goods may be the fork holding the container.

In some embodiments, during the process of taking out the at least one first target goods by using the fork, the fork takes out one first target goods once. For example, a first target goods is taken out from goods position (e.g., storage location) at the first goods-taking stop position by using the fork. A warehouse comprises a plurality of shelves and there is an aisle between two adjacent shelves. The robot moves in the aisle and stops at different goods-taking stop positions. The shelf comprises a plurality of layers, each layer has a plurality of storage locations, and each storage location is placed with one first target goods.

In some embodiments, there may be various situations where the one of the at least one first target goods is taken out by using the fork and loaded onto the fork.

Taking an example of an ex-warehouse scenario for a plurality of first target goods, after other first target goods than a last first target goods of the plurality of first target goods are sequentially taken out of storage locations of a shelf in an ex-warehouse order by using a fork and loaded into pack baskets, it is possible to take out the last first target goods by using the fork and loaded it onto the fork, that is, the fork holds the last first target goods located in a last ex-warehouse order among the plurality of first target goods having the ex-warehouse order to move.

Still taking the example of the ex-warehouse scenario of the plurality of first target goods, it is also possible to sequentially take out the plurality of first target goods in an ex-warehouse order by using the fork and load them into pack baskets, take goods of which an ex-warehouse order is a specified order position out of a pack basket by using the fork and load it onto the fork, that is, the forks holds one first target goods other than a last first target goods located in a last ex-warehouse order among the plurality of first target goods with an ex-warehouse order to move. The ex-warehouse order here may also be referred to as a taking order of the goods.

In the above embodiments, in the ex-warehouse scenario, the first target goods loaded on the fork may be taken out from the storage location of the shelf, or from the pack basket. An im-warehouse scenario is similar to the foregoing ex-warehouse scenario, which is not repeated herein.

In some embodiments, the method for controlling the robot further comprises: in response to receiving, at a first time, a request for acquiring a loading condition of the robot, sending loading condition information of the pack basket of the robot at the first time; and receiving task information of a handling task corresponding to the first time. The task information corresponding to the first time is determined according to the loading condition information of the pack basket of the robot at the first time, and the task information corresponding to the first time comprises position information of the first goods-taking stop position, goods information of the at least one first target goods, and position information of a target position.

In some embodiments, the task information corresponding to the first time further comprises position information of goods-placing stop position corresponding to the at least one first target goods. The goods-placing stop position is a stop position where the robot places the at least one first target goods, for example, a dropping location, i.e., a position where a container is dropped. The position information of the first goods-taking stop position is used for controlling the robot to move to the first goods-taking stop position. The goods information of the at least one first target goods comprises information of the number of the at least one first target goods (goods to be taken)and goods position (for example, storage location where the goods is located), and the like. The loading condition information of the pack basket comprises, for example, the number and identifications of idle pack baskets.

In some embodiments, the task information may be generated by a task processing apparatus according to dynamically changing handling tasks in a task pool in the task processing apparatus, for example, a task issuing system is deployed in the task processing apparatus to issue the handling task of the robot to the apparatus for controlling the robot or the robot.

In some embodiments, the apparatus for controlling the robot may acquire the loading condition information of the robot by acquiring and storing snapshot information of the robot.

In some embodiments, in a case where the first goods-taking stop position comprises a plurality of first goods-taking stop positions, the task information corresponding to the first time further comprises a movement route of the robot consisting of the plurality of first goods-taking stop positions and/or goods-taking order (or a taking order) of taking out the first target goods at each first goods-taking stop position. The movement route of the robot consisting of the plurality of first goods-taking stop positions is determined, for example, according to information such as a position at which the robot is located at the first time, related cost of the movement route, and aisle popularity.

In some embodiments, the taking out the at least one first target goods by using a fork further comprises: taking out another first target goods than the first target goods loaded on the fork of the at least one first target goods and loading the other first target goods into an idle pack basket of the robot by using the fork.

In step S230, in a case where the taking out the at least one first target goods at the first goods-taking stop position is completed, the robot is controlled to move to a target position, wherein the fork is loaded with one of the at least one first target goods during the progress of the robot moving to the target position.

In some embodiments, the target position may comprise a goods-placing stop position corresponding to the at least one first target goods. The goods-placing stop position corresponds to goods position at which goods are placed. Taking the ex-warehouse scenario as an example, in one handling process, the at least one first target goods corresponds to a same goods position, for example, a same conveyor line. Taking the im-warehouse scenario as an example, in one handling process, the at least one first target goods may correspond to different goods positions, for example, different shelves or different storage locations of a same shelf.

In some embodiments, in a case where a load factor of the pack basket of the robot is greater than or equal to a load factor threshold or the number of idle basket baskets is less than or equal to a number threshold, the robot is controlled to move to the goods-placing stop position. By determining the load factor or the number of idle pack baskets, the robot can be loaded as fully as possible in a single handling process, thereby further improving the handling efficiency of the robot in handling goods.

In some embodiments, the taking out one of the at least one first target goods by using the fork and loading the one of the at least one first target goods onto the fork comprises: in a case where goods docking type of the goods-placing stop position corresponding to the at least one first target goods belongs to a specified docking type, taking out the one of the at least one first target goods by using the fork and loading the one of the at least one first target goods onto the fork. The goods docking type refers to a docking type for placing the goods, and may be understood as a type of the goods position, comprising, for example, a conveyor line type or shelf type. By determining the goods docking type of the goods-placing stop position, the goods can be loaded to the fork under the specified docking type, implementing handling control in different manners under different scenarios, with a higher flexibility. In some embodiments, the specified docking type is a docking type that goods can be taken and placed by using the fork. For example, the specified docking type is a conveyor line type, a shelf type, or the like. The conveyor line type is usually a specified docking type in the ex-warehouse scenario, indicating that goods position at the goods-placing stop position is a conveyor line. The shelf type is usually a specified docking type in the im-warehouse scenario, indicating that goods position at the goods-placing stop position is a storage location on a shelf.

In some embodiments, the method for controlling the robot further comprises acquiring configuration information stored locally, the configuration information comprising a correspondence between the goods-placing stop position and whether to perform goods loading by using the pack basket and the fork simultaneously. In this case, when the goods docking type of the goods-placing stop position belongs to the specified docking type and the configuration information indicates that for the goods-placing stop position, goods loading is performed by using the pack basket and the fork simultaneously, the one of the at least one first target goods is taken out by using the fork and loaded onto the fork. Taking the "8+1" loading as an example, configuration information comprises a correspondence between goods-placing stop position and an identification of whether to perform the "8+1" loading or not. A user may initialize and maintain the configuration information.

In the above embodiments, goods docking type of goods-placing stop position is usually pre-configured by a workstation corresponding to the goods-placing stop position. By adding configuration information stored locally, it is possible to flexibly configure certain goods-placing stop positions with goods docking types belonging to a specified docking type to use or not use the pack basket and the fork loading goods method to perform goods handling, thereby improving the flexibility of the goods handling of the robot.

In some embodiments, taking an example that the target position comprises the goods-placing stop position corresponding to the at least one first target goods, when the robot moves to the goods-placing stop position corresponding to the at least one first target goods, the fork is controlled to place the first target goods loaded on the fork to the goods position corresponding to the goods-placing stop position. The goods position is a position for placing goods, i.e., a position where the goods is located. After the first target goods loaded on the fork is placed at the goods position corresponding to the goods-placing stop position, in a case where a pack basket of the robot is therein loaded with goods, the fork is controlled to take a first target goods loaded in the pack basket out of the pack basket and place the taken first target goods at the goods position corresponding to the goods-placing stop position. For example, when taking out goods by using the fork at goods-taking stop position and loading the goods, the robot may report position information of the goods-taking stop position, position change information of the goods, and the like, so that the apparatus for controlling the robot or the robot may determine whether the fork is loaded with goods, or determine whether the pack basket is loaded with goods. In some embodiments, the robot may also report its position information to the apparatus for controlling the robot in real time, so that the apparatus for controlling the robot can determine the position of the robot in real time and control the robot to move, and so on.

In the above embodiments, during the process that the robot handles goods to the goods-placing stop position, goods on the fork can be directly placed on goods position at the goods-placing stop position, while for goods on the pack basket, there is a need to first control the fork to take the goods out of the pack basket and then place the taken goods onto goods position at the goods-placing stop position. In a case where the number of goods is the same, this manner can reduce the process of the fork taking the goods out of the pack basket once, and also reduce the process of the fork placing the taken goods into the pack basket once, which can more quickly take out the goods and place them on the goods position at the goods-placing stop position, thereby further improving the handling efficiency of the robot in handling goods.

In some embodiments, in a case where there is an idle pack basket of the robot and the robot has not moved to the goods-placing stop position, the target position comprises a second goods-taking stop position, the second goods-taking stop position being a stop position at which at least one second target goods is taken out, and the second goods-taking stop position being reached after reaching the first goods-taking stop position. The method for controlling the robot further comprises: controlling the fork to load the first target goods loaded on the fork into the idle pack basket; and in a case where the robot moves to the second goods-taking stop position, controlling the robot to take out the at least one second target goods at the second goods-taking stop position by using the fork, wherein the taking out the at least one second target goods by using the fork comprises taking out one of the at least one second target goods by using the fork and loading the one of the at least one second target goods onto the fork.

In the above embodiments, the robot may be initially controlled to the first goods-taking stop position to handle goods. Then since there is still an idle pack basket of the robot, the robot is controlled to reach the second goods-taking stop position to continue taking goods before the robot moves to the goods-placing stop position, to make the robot loaded as fully as possible, and thus the handling efficiency of the robot in handling goods can be further improved.

In some embodiments, in a case where the taking out the at least one second target goods by using the fork at the second goods-taking stop position is completed, the robot is controlled to move to another target position than the above target position. The other target position may be, for example, a third goods-taking stop position which is reached after reaching the second goods-taking stop position or the goods-placing stop position of the at least one first target goods and the at least one second target goods.

In some embodiments, the taking out the at least one second target goods by using the fork further comprises: taking out another second target goods than the second target goods loaded on the fork of the at least one second target goods by using the fork and loading the other second target goods into the idle pack basket.

In some embodiments, taking an example that the task information corresponding to the first time comprises the position information of the goods-placing stop position corresponding to the handling task for the first time, the method for controlling the robot further comprises, in a case where a goods docking type of the goods-placing stop position corresponding to the handling task for the first time belongs to a specified docking type, in response to receiving, at a second time later than the first time, a request for acquiring a loading condition of the robot, sending loading condition information of the pack basket and the fork of the robot at the second time. The loading condition information of the pack basket and the fork of the robot at the second time is used for determining task information of a handling task corresponding to the second time, the task information corresponding to the second time comprising position information of the second goods-taking stop position, goods information of the at least one second target goods, and position information of goods-placing stop position corresponding to the handling task for the second time. In some embodiments, at the goods-placing stop position with the specified docking type, there is a need to place goods by using the fork. For example, the specified docking type is a conveyor line docking type or shelf docking type.

In the above embodiments, since the robot cannot determine whether goods can be loaded by using the fork at the first time,, only the loading condition information of the pack basket is sent at the first time for determining a handling task. After receiving the handling task for the first time, it is possible to determine, by goods docking type of goods-placing stop position corresponding to the handling task for the first time, whether goods can be loaded by using the pack basket and the fork, and thus loading condition information of the fork and the pack basket is sent at the second time for determining a supplemented handling task, which can more accurately allocate the handling task for the robot, improving the rationality of the allocation of the handling task.

In some embodiments, the request for acquiring the loading condition of the robot is periodic. In this case, it is possible to monitor the loading condition of the robot in real time, supplement a handling task to the robot in time, making the robot loaded as fully as possible, and further improving the handling efficiency of the robot in handling goods. For example, the request for acquiring the loading condition of the robot is made once every 200 milliseconds. In this case, the task processing apparatus may periodically monitor the handling task in the task pool to supplement a handling task to the robot based on the loading condition of the robot.

In some embodiments, the method for controlling the robot further comprises acquiring configuration information stored locally, the configuration information comprising a correspondence between the goods-placing stop position and whether to perform goods loading by using the pack basket and the fork simultaneously. In this case, when the goods docking type of the goods-placing stop position corresponding to the handling task for the first time belongs to the specified docking type and the configuration information indicates that for the goods-placing stop position corresponding to the handling task for the first time, goods loading is performed by using the pack basket and the fork simultaneously, loading condition information of the pack basket and fork of the robot at a second time is sent in response to receiving, at the second time later than the first time, a request for acquiring a loading condition of the robot.

In the above embodiments, goods docking type of goods-placing stop position is usually pre-configured by a workstation corresponding to the goods-placing stop position. By adding configuration information stored locally, it is possible to flexibly configure some goods-placing stop positions with a goods docking type that belongs to a specified docking type, using or not using a goods loading method by using the pack basket and the fork to handle goods, thereby improving the flexibility of the robot in goods handling.

In some embodiments, the taking out the at least one second target goods by using the fork comprises: in a case where there is only one second goods-taking stop position and there is only one second target goods at the second goods-taking stop position, taking out the second target goods by using the fork and loading the second target goods onto the fork.

In some embodiments, the taking out the at least one second target goods by using the fork may further comprise the following steps.

First, in a case where there are a plurality of second goods-taking stop positions and the number of idle pack baskets is greater than or equal to the number of the plurality of second goods-taking stop positions, the robot is controlled to take out the second target goods by using the fork at another second goods-taking stop position than a last second goods-taking stop position and load the second target goods into the idle pack basket.

Then, in a case where there is only one second target goods at the last second goods-taking stop position, the robot is controlled to take out the second target goods by using the fork at the last second goods-taking stop position and load the second target goods onto the fork. In a case where there are a plurality of second target goods at the last second goods-taking stop position, the robot is controlled to take out another second target goods than a last second target goods of the plurality of second target goods by using the fork at the last second goods-taking stop position and load the other second target goods into the idle pack basket, and then take out the last second target goods of the plurality of second target goods by using the fork and load the last second target goods onto the fork.

In some embodiments, the second target goods loaded onto the fork may also be a second target goods with another taking order than a last taking order of the plurality of second target goods having a taking order. In this case, it is possible to first take out the plurality of second target goods in the taking order by the fork and load the plurality of second target goods into the pack basket, and then take a second target goods that needs to be loaded by using the fork out of the pack basket and load the second target goods that needs to be loaded by using the fork onto the fork.

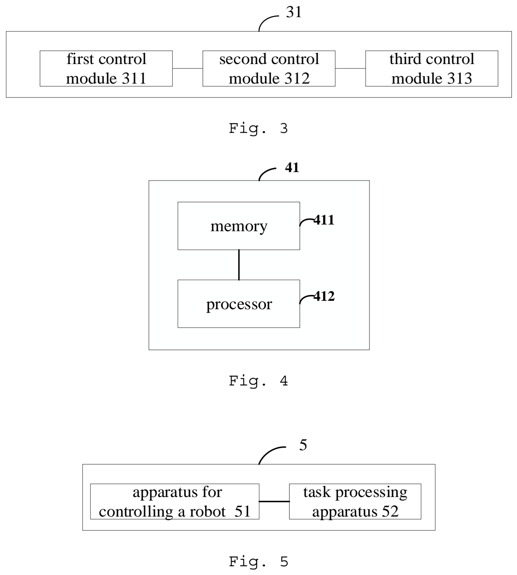

Fig. 3 is a block diagram illustrating an apparatus for controlling a robot according to some embodiments of the present disclosure.

As shown in Fig. 3, the apparatus for controlling the robot 31 comprises a first control module 311, a second control module 312, and a third control module 313.

The first control module 311 is configured to control a robot to move to a first goods-taking stop position, wherein the first goods-taking stop position is a stop position at which the robot takes out at least one first target goods, for example, to perform the step S210 shown in Fig. 2. The robot comprises a liftable fork and at least one pack basket, the fork being used for taking and placing goods, and each pack basket being used for temporarily storing the goods.

The second control module 312 is configured to control the robot to take out the at least one first target goods by using the fork at the first goods-taking stop position, wherein the taking out the at least one first target goods by using the fork comprises: taking out one of the at least one first target goods by using the fork and loading the one of the at least one first target goods onto the fork, for example, to perform the step S220 shown in Fig. 2.

In some embodiments, the second control module 312 is further configured to take out another second target goods than a second target goods loaded on the fork of at least one second target goods by using the fork and loading the other second target goods into the idle pack basket.

In some embodiments, the second control module 312 is further configured to take out another first target goods than the first target goods loaded on the fork of the at least one first target goods by using the fork and loading the other first target goods into an idle pack basket of the robot.

The third control module 313 is configured to, in a case where the taking out the at least one first target goods at the first goods-taking stop position is completed, control the robot to move to a target position. The fork is loaded with the one of the at least one first target goods during the process of the robot moving to the target position, for example, to perform the step S230 shown in Fig. 2.

In some embodiments, taking an example that the target position comprises a goods-placing stop position corresponding to the at least one first target goods, the apparatus for controlling the robot 31 further comprises a fourth control module. The fourth control module is configured to, in a case where the robot moves to the goods-placing stop position, control the fork to place the first target goods loaded on the fork at goods position corresponding to the goods-placing stop position; and after the first target goods loaded on the fork is placed at the goods position corresponding to the goods-placing stop position, in a case where a pack basket of the robot is therein loaded with goods, control the fork to take a first target goods loaded in the pack basket out of the pack basket and place the taken first target goods at the goods position corresponding to the goods-placing stop position.

In some embodiments, in a case where there is an idle pack basket of the robot, the target position comprises a second goods-taking stop position, the second goods-taking stop position being a stop position at which at least one second target goods is taken out. In this case, the apparatus for controlling the robot 31 further comprises a fifth control module. The fifth control module is configured to control the fork to load the first target goods loaded on the fork into the idle pack basket; and when the robot moves to the second goods-taking stop position, control the robot to take out the at least one second target goods by using the fork at the second goods-taking stop position, wherein the taking out the at least one second target goods by using the fork comprises: taking out one of the at least one second target goods by using the fork and loading the one of the at least one second target goods onto the fork.

In some embodiments, the apparatus for controlling the robot 31 further comprises a sending module and a receiving module.

The sending module is configured to, in response to receiving, at a first time, a request for acquiring a loading condition of the robot, send loading condition information of the pack basket of the robot at the first time.

The receiving module is configured to receive task information of a handling task corresponding to the first time, wherein the task information is determined according to the loading condition information of the pack basket of the robot at the first time, and the task information corresponding to the first time comprises position information of the first goods-taking stop position, goods information of the at least one first target goods, position information of the target position, and position information of goods-placing stop position corresponding to the handling task for the first time.

The sending module is further configured to, in a case where a goods docking type of the goods-placing stop position corresponding to the handling task for the first time belongs to a specified docking type, in response to receiving, at a second time later than the first time, a request for acquiring a loading condition of the robot, send loading condition information of the pack basket and the fork of the robot at the second time, wherein the loading condition information of the pack basket and the fork of the robot at the second time is used for determining task information of a handling task corresponding to the second time, the task information corresponding to the second time comprising position information of the second goods-taking stop position, goods information of the at least one second target goods, and position information of goods-taking stop position corresponding to the handling task for the second time.

In some embodiments, the apparatus for controlling the robot 31 further comprises an acquisition module. The acquisition module is configured to acquire configuration information stored locally, the configuration information comprising a correspondence between the goods-placing stop position and whether to perform goods loading by using the pack basket and the fork simultaneously. The sending module is further configured to, in a case where the goods docking type of the goods-placing stop position corresponding to the handling task for the first time belongs to the specified docking type and the configuration information indicates that for the goods-placing stop position corresponding to the handling task for the first time, goods loading is performed by using the pack basket and the fork simultaneously, in response to receiving, at a second time later than the first time, a request for acquiring a loading condition of the robot, send loading condition information of the pack basket and the fork of the robot at the second time.

In some embodiments, the second control module 312 is further configured to, in a case where a goods docking type of the goods-placing stop position corresponding to the at least one first target goods belongs to the specified docking type, take out the one of the at least one first target goods by using the fork and load the one of the at least one first target goods onto the fork.

In some embodiments, the second control module 312 is further configured to, in a case where the goods docking type of the goods-placing stop position belongs to the specified docking type and the configuration information indicates that for the goods-placing stop position, goods loading is performed by using the pack basket and the fork simultaneously, take out the one of the at least one first target goods by using the fork and load the one of the at least one first target goods onto the fork.

The division of different modules in the above embodiments is only one of the division manners, and does not represent a unique division manner. The apparatus for controlling the robot may be deployed in a robot console or robot control system, or deployed in the robot.

Fig. 4 is a block diagram illustrating an apparatus for controlling a robot according to other embodiments of the present disclosure.

As shown in Fig. 4, the apparatus for controlling the robot 41 comprises a memory 411; and a processor 412 coupled to the memory 411. The memory 411 is used for storing instructions for performing a corresponding embodiment of the method for controlling the robot. The processor 412 is configured to perform, based on instructions stored in the memory 411, the method for controlling the robot in any embodiments in the present disclosure.

Fig. 5 is a block diagram illustrating a system for handling goods according to some embodiments of the present disclosure.

As shown in Fig. 5, the system for handling goods 5 comprises an apparatus for controlling a robot 51. The apparatus for controlling the robot 51 is configured to perform the method for controlling the robot in any of the embodiments of the present disclosure, for example, the apparatus for controlling the robot 31 or the apparatus for controlling the robot 41.

In some embodiments, the system for handling goods 5 further comprises a task processing apparatus 52. The task processing apparatus 52 is configured to send, at a first time, a request for acquiring a loading condition of the robot to the apparatus for controlling the robot.

The apparatus for controlling the robot 51 is configured to, in response to receiving, at the first time, the request for acquiring the loading condition of the robot, send loading condition information of a pack basket of the robot at the first time to the task processing apparatus.

The task processing apparatus 52 is further configured to determine task information of a handling task corresponding to the first time according to the loading condition information of the pack basket of the robot at the first time, the task information corresponding to the first time comprising position information of each first goods-taking stop position, goods information of at least one first target goods, and position information of a target position.

In some embodiments, the task information corresponding to the first time further comprises position information of goods-placing stop position corresponding to the at least one first target goods, and the target position comprises a second goods-taking stop position, the second goods-taking stop position being a stop position at which at least one second target goods is taken out. In this case, the task processing apparatus 52 is further configured to send, at a second time later than the first time, a request for acquiring a loading condition of the robot to the apparatus for controlling the robot.

The apparatus for controlling the robot 51 is further configured to, in a case where a goods docking type of the goods-placing stop position corresponding to the at least one first target goods belongs to a specified docking type, in response to receiving, at the second time, the request for acquiring the loading condition of the robot, send loading condition information of the pack basket and the fork of the robot at the second time to the task processing apparatus.

The task processing apparatus 52 is further configured to determine task information of a handling task corresponding to the second time according to the loading condition information of the pack basket and the fork of the robot at the second time, the task information corresponding to the second time comprising position information of a second goods-taking stop position, goods information of the at least one second target goods, and position information of goods-placing stop position (i.e., goods-placing stop position of the handling task corresponding to the second time) corresponding to the at least one second target goods.

In some embodiments, in a case where the apparatus for controlling the robot is not deployed in a robot, the system for handling goods further comprises the robot in the foregoing embodiments. Separating the apparatus for controlling the robot from the robot can reduce the cost of the robot, and reduce the pressure of a control system of the robot.

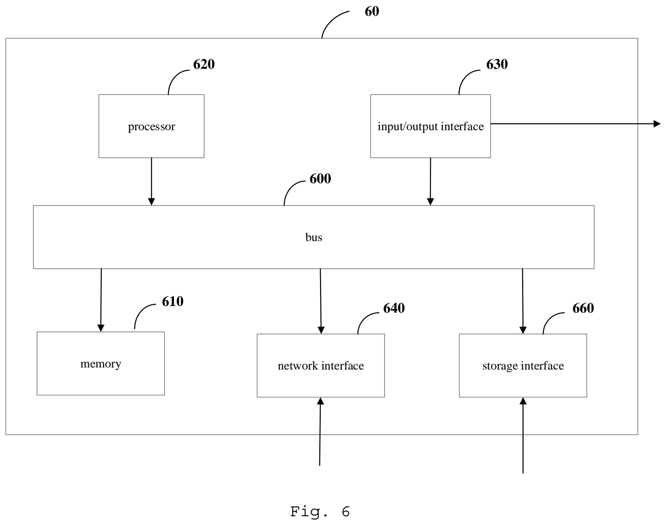

Fig. 6 is a block diagram illustrating a computer system for implementing some embodiments of the present disclosure.

As shown in Fig. 6, the computer system 60 may represented in the form of a general-purpose computing device. The computer system 60 comprises a memory 610, a processor 620, and a bus 600 for connecting various system components.

The memory 610 may comprise, for example, a system memory, non-volatile storage medium, and the like. The system memory has therein stored, for example, an operating system, application, boot loader, other program, and the like. The system memory may comprise a volatile storage medium, for example, a random access memory (RAM) and/or cache memory. The non-volatile storage medium has therein stored, for example, instructions for performing corresponding embodiments of at least one of the methods for controlling the robot. The non-volatile storage medium comprises, but is not limited to, magnetic disk storage, optical storage, flash memory, and the like.

The processor 620 may be implemented by using a discrete hardware component, such as a general-purpose processor, digital signal processor (DSP), application specific integrated circuit (ASIC), field programmable gate array (FPGA) or other programmable logic device, discrete gate or transistor. Accordingly, each of the modules such as a judging module and a determining module may be implemented by a central processing unit (CPU) running instructions in a memory that perform the corresponding steps, or by a dedicated circuit that performs the corresponding steps.

For the bus 600, any of a variety of bus structures may be used. For example, the bus structures comprise, but are not limited to, an industry standard architecture (ISA) bus, micro channel architecture (MCA) bus, and peripheral component interconnect (PCI) bus.

The computer system 60 may also comprise an input/output interface 630, network interface 640, storage interface 660, and the like. These interfaces 630, 640, 660, as well as the memory 610 and the processor 620 may be connected by the bus 600. The input/output interface 630 may provide a connection interface for input/output devices such as a display, mouse, and keyboard. The network interface 640 provides a connection interface for a variety of networking devices. The storage interface 660 provides a connection interface for external storage devices such as a floppy disk, USB flash disk, and SD card.

Various aspects of the present disclosure are described herein with reference to the flow diagrams and/or block diagrams of the method, apparatus and computer program product according to the embodiments of the present disclosure. It should be understood that each block of the flow diagrams and/or block diagrams and combinations of the blocks may be implemented by computer-readable program instructions.

These computer-readable program instructions may be provided to a processor of a general-purpose computer, special-purpose computer, or other programmable apparatus to produce a machine, such that the instructions are executed by the processor to create means for implementing the functions specified in one or more blocks in the flow diagrams and/or block diagrams.

These computer-readable program instructions may also be stored in a computer-readable memory, and these instructions cause a computer to work in a specific manner, thereby producing an article of manufacture, comprising instructions for implementing the functions specified in one or more blocks in the flow diagrams and/or block diagrams.

The present disclosure may take the form of an entire hardware embodiment, an entire software embodiment, or an embodiment combining software and hardware aspects.

By the method and apparatus for controlling the robot for natural language processing, the system for handling goods, and the computer-readable storage medium in the above embodiments, the goods handling capacity and efficiency of the robot can be improved.

So far, the method and apparatus for controlling the robot, system for handling goods, and computer-readable storage medium according to the present disclosure have been described in detail. Some details well known in the art have not been described in order to avoid obscuring the concepts of the present disclosure. Those skilled in the art can fully appreciate how to implement the technical solutions disclosed herein according to the foregoing description.

## Claims

1. A method for controlling a robot, wherein the robot comprises a liftable fork and at least one pack basket, the fork being used for taking and placing goods, and each pack basket being used for temporarily storing the goods, the method for controlling the robot comprising:
controlling the robot to move to a first goods-taking stop position, wherein the first goods-taking stop position is a stop position at which the robot takes out at least one first target goods;
controlling the robot to take out the at least one first target goods by using the fork at the first goods-taking stop position, wherein the taking out the at least one first target goods by using the fork comprises taking out one of the at least one first target goods by using the fork and loading the one of the at least one first target goods onto the fork; and
controlling the robot to move to a target position in a case where the taking out the at least one first target goods at the first goods-taking stop position is completed, wherein the fork is loaded with the one of the at least one first target goods during a process of the robot moving to the target position.

2. The method for controlling the robot according to claim 1, wherein the target position comprises a goods-placing stop position corresponding to the at least one first target goods, the goods-placing stop position being a stop position at which the robot places the at least one first target goods, the method for controlling the robot further comprising:
controlling the fork to place the first target goods loaded on the fork at goods position corresponding to the goods-placing stop position in a case where the robot moves to the goods-placing stop position; and
controlling the fork to take a first target goods loaded in the pack basket out of the pack basket and placing the taken first target goods at the goods position corresponding to the goods-placing stop position after the first target goods loaded on the fork is placed at the goods position corresponding to the goods-placing stop position in a case where the pack basket of the robot is therein loaded with goods.

3. The method for controlling the robot according to any of claims 1-2, wherein the target position comprises a second goods-taking stop position in a case where there is an idle pack basket of the robot, the second goods-taking stop position being a stop position at which at least one second target goods is taken out, the method for controlling the robot further comprising:
controlling the fork to load the first target goods loaded on the fork into the idle pack basket; and
controlling the robot to take out the at least one second target goods by using the fork at the second goods-taking stop position in a case where the robot moves to the second goods-taking stop position, wherein the taking out the at least one second target goods by using the fork comprises taking out one of the at least one second target goods by using the fork and loading the one of the at least one second target goods onto the fork.

4. The method for controlling the robot according to claim 3, wherein the taking out the at least one second target goods by using the fork further comprises:
taking out another second target goods than the second target goods loaded on the fork of the at least one second target goods by using the fork and loading the other second target goods into the idle pack basket.

5. The method for controlling the robot according to claim 3 or 4, further comprising:
sending loading condition information of the pack basket of the robot at the first time in response to receiving, at a first time, a request for acquiring a loading condition of the robot;
receiving task information of a handling task corresponding to the first time, wherein the task information is determined according to the loading condition information of the pack basket of the robot at the first time, and the task information corresponding to the first time comprises position information of the first goods-taking stop position, goods information of the at least one first target goods, and position information of goods-placing stop position corresponding to the handling task for the first time; and
in a case where a goods docking type of the goods-placing stop position corresponding to the handling task for the first time belongs to a specified docking type, sending loading condition information of the pack basket and the fork of the robot at a second time in response to receiving, at the second time later than the first time, a request for acquiring a loading condition of the robot, wherein the loading condition information of the pack basket and the fork of the robot at the second time is used for determining task information of a handling task corresponding to the second time, the task information corresponding to the second time comprising position information of the second goods-taking stop position, goods information of the at least one second target goods, and position information of goods-placing stop position corresponding to the handling task for the second time.

6. The method for controlling the robot according to claim 5, further comprising:
acquiring configuration information stored locally, the configuration information comprising a correspondence between the goods-placing stop position and whether to perform goods loading by using the pack basket and the fork simultaneously, wherein the loading condition information of the pack basket and the fork of the robot at the second time is sent in response to receiving, at the second time later than the first time, the request for acquiring the loading condition of the robot, in a case where the goods docking type of the goods-placing stop position corresponding to the handling task for the first time belongs to the specified docking type and the configuration information indicates that for the goods-placing stop position corresponding to the handling task for the first time, goods loading is performed by using the pack basket and the fork simultaneously.

7. The method for controlling the robot according to any of claims 1-6, wherein the taking out one of the at least one first target goods by using the fork and loading the one of the at least one first target goods onto the fork comprises:
taking out one of the at least one first target goods by using the fork and loading the one of the at least one first target goods onto the fork in a case where a goods docking type of the goods-placing stop position corresponding to the at least one first target goods belongs to a specified docking type.

8. The method for controlling the robot according to claim 7, further comprising:
acquiring configuration information stored locally, the configuration information comprising a correspondence between the goods-placing stop position and whether to perform goods loading by using the pack basket and the fork simultaneously, wherein the one of the at least one first target goods is taken out by using the fork and loaded onto the fork, in a case where the goods docking type of the goods-placing stop position belongs to the specified docking type and the configuration information indicates that for the goods-placing stop position, goods loading is performed by using the pack basket and the fork simultaneously.

9. The method for controlling the robot according to any of claims 1-6, wherein the taking out the at least one first target goods by using the fork further comprises:
taking out another first target goods than the first target goods loaded on the fork of the at least one first target goods by using the fork and loading the other first target goods into an idle pack basket of the robot.

10. The method for controlling the robot according to any of claims 1-6, further comprising:
sending loading condition information of the pack basket of the robot at a first time in response to receiving, at the first time, a request for acquiring a loading condition of the robot; and
receiving task information of a handling task corresponding to the first time, wherein the task information is determined according to the loading condition information of the pack basket of the robot at the first time, and the task information corresponding to the first time comprises position information of the first goods-taking stop position, goods information of the at least one first target goods, and position information of the target position.

11. An apparatus for controlling a robot, comprising:
a first control module, configured to control the robot to move to a first goods-taking stop position, wherein the first goods-taking stop position is a stop position at which the robot takes out at least one first target goods, and the robot comprises a liftable fork and at least one pack basket, the fork being used for taking and placing goods, and each pack basket being used for temporarily storing the goods;
a second control module, configured to control the robot to take out the at least one first target goods by using the fork at the first goods-taking stop position, wherein the taking out the at least one first target goods by using the fork comprises taking out one of the at least one first target goods by using the fork and loading the one of the at least one first target goods onto the fork; and
a third control module, configured to control the robot to move to a target position in a case where the taking out the at least one first target goods at the first goods-taking stop position is completed, wherein the fork is loaded with the one of the at least one first target goods during a process of the robot moving to the target position.

12. An apparatus for controlling a robot, comprising:
a memory; and
a processor being coupled to the memory, the processor being configured to perform, based on instructions stored in the memory, the method for controlling the robot according to any of claims 1 to 10.

13. A system for handling goods, comprising:
an apparatus for controlling a robot configured to perform the method for controlling the robot according to any of claims 1 to 10.

14. The system for handling goods according to claim 13, further comprising:
a task processing apparatus configured to send, at a first time, a request for acquiring a loading condition of the robot to the apparatus for controlling the robot;
the apparatus for controlling the robot configured to, in response to receiving, at the first time, the request for acquiring the loading condition of the robot, send loading condition information of the pack basket of the robot at the first time to the task processing apparatus; and
the task processing apparatus further configured to determine task information of a handling task corresponding to the first time according to the loading condition information of the pack basket of the robot at the first time, the task information corresponding to the first time comprising position information of a first goods-taking stop position, goods information of at least one first target goods, and position information of a target position.

15. The system for handling goods according to claim 14, wherein: the task information corresponding to the first time further comprises position information of goods-placing stop position corresponding to the at least one first target goods, and the target position comprises a second goods-taking stop position, the second goods-taking stop position being a stop position at which at least one second target goods is taken out;
the task processing apparatus is further configured to send, at a second time later than the first time, a request for acquiring a loading condition of the robot to the apparatus for controlling the robot;
the apparatus for controlling the robot is further configured to, in a case where a goods docking type of the goods-placing stop position corresponding to the at least one first target goods belongs to a specified docking type, in response to receiving, at the second time, the request for acquiring the loading condition of the robot, send loading condition information of the pack basket and the fork of the robot at the second time to the task processing apparatus; and
the task processing apparatus is further configured to determine task information of a handling task corresponding to the second time according to the loading condition information of the pack basket and the fork of the robot at the second time, the task information corresponding to the second time comprising position information of a second goods-taking stop position, goods information of the at least one second target goods, and position information of goods-placing stop position corresponding to the at least one second target goods.

16. A computer-readable storage medium having thereon stored computer program instructions which, when executed by a processor, implement the method for controlling the robot according to any of claims 1 to 10.

17. A computer program, comprising:
instructions which, when executed by a processor, cause the processor to perform the method for controlling the method according to any of claims 1 to 10.
